(19) Europäisches Patentamt
European Patent Office
Office européen des brevets

(11) EP 3 778 190 A1

(12) # EUROPEAN PATENT APPLICATION
published in accordance with Art. 153(4) EPC

(43) Date of publication:
**17.02.2021 Bulletin 2021/07**

(21) Application number: **19777536.4**

(22) Date of filing: **27.03.2019**

(51) Int Cl.:
***B29C 64/118*** *(2017.01)* ***B29C 64/314*** *(2017.01)*
***B33Y 70/00*** *(2020.01)* ***C08K 3/013*** *(2018.01)*
***C08K 3/36*** *(2006.01)* ***C08K 5/098*** *(2006.01)*
***C08K 5/49*** *(2006.01)* ***C08L 67/00*** *(2006.01)*
***C08L 67/03*** *(2006.01)* ***C08L 69/00*** *(2006.01)*
***C08L 77/00*** *(2006.01)*

(86) International application number:
**PCT/JP2019/013125**

(87) International publication number:
**WO 2019/189328 (03.10.2019 Gazette 2019/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **27.03.2018 JP 2018060228**

(71) Applicant: **UNITIKA LTD.**
**Amagasaki-shi**
**Hyogo 660-0824 (JP)**

(72) Inventors:
- **USUI Azusa**
  **Uji-shi, Kyoto 611-0021 (JP)**
- **KAMIKAWA Hiroo**
  **Uji-shi, Kyoto 611-0021 (JP)**
- **MATSUOKA Fumio**
  **Uji-shi, Kyoto 611-0021 (JP)**
- **KUMAZAWA Shohei**
  **Uji-shi, Kyoto 611-0021 (JP)**

(74) Representative: **Vigand, Philippe et al**
**Novagraaf International SA**
**Chemin de l'Echo 3**
**1213 Onex - Genève (CH)**

(54) **RESIN COMPOSITION AND FILAMENT-LIKE MOLDED BODY FORMED FROM SAME**

(57) Provided is a resin composition for modeling materials for fused deposition modeling 3D printers, the resin composition containing a polyarylate resin (A) and a polyester resin (B), containing the component (A) and a polyamide resin (C), or containing the component (A) and a polycarbonate resin (D).

EP 3 778 190 A1

## Description

### Technical Field

The present invention relates to a resin composition for modeling materials with fused deposition modeling 3D printers, and a filament-like molded body formed from the same.

### Background Art

3D printers, which produce three-dimensional models (3D objects) on the basis of data of three-dimensional CAD or three-dimensional computer graphics, have spread rapidly and centered on industrial applications in recent years. Modeling methods of the 3D printers include the methods such as stereolithography, inkjet, powder lamination method, sintering method, and fused deposition modeling. Among these methods, fused deposition modeling has been actively studied because of the high versatility.

Most frequently ABS resin and polylactide resin are used in fused deposition modeling. However, three-dimensionally shaped objects obtained from these resin materials have the low heat resistance. Hence, the use of engineering plastics has been studied. However, the three-dimensionally shaped objects made by engineering plastics may have the large warpage, the large thermal shrinkage and low dimensional stability.

Patent Literature 1 discloses that the mixing of a crystalline resin such as polyether ether ketone with an amorphous thermoplastic resin such as polyetherimide improves the dimensional stability of the three-dimensional model. Patent Literature 1 shows the example of an amorphous polyarylate resin as the amorphous thermoplastic resin. However, the upper limit of the nozzle temperature is about 300°C for many kinds of fused deposition modeling 3D printers and the polymer such as polyether ether ketone has a very high melting point, so the printer to print with the material including this is limited.

Patent Literature 2 discloses the filament for material extrusion 3D printers composed of an aromatic polyester resin with suppressed crystallinity and containing 10 mol% or more of an isophthalic acid unit. However, the resin used in this literature is the resin with the low heat resistance comparable to that of ABS resin or polylactide resin.

### Citation List

### Patent Literature

Patent Literature 1: Japanese Patent Laid-Open No. 2017-217881
Patent Literature 2: Japanese Patent Laid-Open No. 2016-210947

### Summary of Invention

### Technical Problem

In the view of the related art, an object of the present invention is to provide a resin composition and a filament-like molded body that can be suitably used as a modeling material in obtaining a three-dimensional model with a fused deposition modeling 3D printer, and can be a three-dimensional model excellent in the heat resistance and enabling modeling in a temperature range handleable in many types of equipments, and also excellent in dimensional stability.

### Solution to Problem

The present inventors have conducted diligent studies to attain the object, and consequently found that the object can be attained by a resin composition containing a polyarylate resin (A) and a polyester resin (B), or a resin composition containing the polyarylate resin (A) and a polyamide resin (C), or a resin composition containing the polyarylate resin (A) and a polycarbonate resin (D), reaching the completion of the present invention.

Specifically, the present invention is summarized as described below.

[1] A resin composition for modeling materials for fused deposition modeling 3D printers, the resin composition containing a polyarylate resin (A) and a polyester resin (B), wherein a mass ratio of the polyarylate resin (A) to the polyester resin (B) ((A)/(B)) is 70/30 to 40/60; or containing the polyarylate resin (A) and a polyamide resin (C), wherein a mass ratio of the polyarylate resin (A) to the polyamide resin (C) ((A)/(C)) is 60/40 to 40/60; or containing

the polyarylate resin (A) and a polycarbonate resin (D), wherein a mass ratio of the polyarylate resin (A) to the polycarbonate resin (D) ((A)/(D)) is 60/40 to 40/60.
[2] The resin composition according to [1], wherein the polyarylate resin (A) is a resin mainly comprising an aromatic dicarboxylic acid residue and a dihydric phenol residue.
[3] The resin composition according to [2], wherein the dihydric phenol residue is a residue represented by the following chemical formula (1):

[Formula 1]

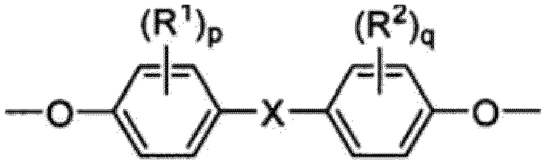
(1)

wherein $R^1$ and $R^2$ each independently represent a hydrocarbon group having 1 to 6 carbon atoms, an alkyl halide group or a halogen atom; p and q each independently represent an integer of 0 to 4; and X represents a hydrocarbon group or an alkyl halide group.
[4] The resin composition according to any of [1] to [3], wherein the resin composition further contains an alkali metal salt or alkaline earth metal salt (X) and a phosphorus compound (Y) together with the polyester resin (B) .
[5] The resin composition according to any of [1] to [3], wherein the resin composition further contains spherical silica (Z) together with the polycarbonate resin (D).
[6] The resin composition according to any of [1] to [5], wherein the resin composition further contains a filler (E).
[7] A filament-like molded body being a molded body for modeling materials for fused deposition modeling 3D printers, comprising a resin composition according to any of [1] to [6] and having a diameter of 0.2 to 5.0 mm.

Advantageous Effects of Invention

The present invention can provide a resin composition and a filament-like molded body that can be suitably used as a modeling material in obtaining a three-dimensional model with a fused deposition modeling 3D printer, and can produce a three-dimensional model excellent in heat resistance and also excellent in dimensional stability. Furthermore, the resin composition of the present invention has a decreased softening point, is processable at a lower temperature and the deterioration of resins ascribable to a high temperature can be suppressed.

Brief Description of Drawings

[FIG. 1] FIG. 1 is an illustrative diagram of "rook" produced in order to evaluate dimensional stability.
[FIG. 2] FIG. 2 is an illustrative diagram of "anchor" produced in order to evaluate dimensional stability.

Description of Embodiments

The resin composition of the present invention is a resin composition for modeling materials for fused deposition modeling 3D printers, and contains a polyarylate resin (A) and a polyester resin (B); or contains the polyarylate resin (A) and a polyamide resin (C); or contains the polyarylate resin (A) and a polycarbonate resin (D).

<Polyarylate resin (A)>

The polyarylate resin (A) constituting the resin composition of the present invention mainly includes an aromatic dicarboxylic acid residue and a dihydric phenol residue, and is a resin constituted by a dicarboxylic acid component and a diol component. For the polyarylate resin, the phrase "mainly including (or comprising) an aromatic dicarboxylic acid residue and a dihydric phenol residue" means that the aromatic dicarboxylic acid residue and the dihydric phenol residue are of 70 mol% or more with respect to the total dicarboxylic acid component and the total diol component, respectively. Each of the ratio of the total aromatic dicarboxylic acid residue to the total dicarboxylic acid component, and the ratio of the total dihydric phenol residue to the total diol component is preferably 90 mol% or more, more preferably 100 mol%. The polyarylate resin (A) is produced by a solution polymerization method, an interfacial polymerization method, or the like.

The polyarylate resin (A) according to the present invention is amorphous. In the present invention, the term "amorphous" means that the value of heat of fusion is 5 cal/g or lower when the temperature is raised under conditions involving a temperature rise rate of 10°C/min using a differential scanning calorimeter (model DSC-7 manufactured by PerkinElmer Inc.). Unlike liquid crystals having a so-called mesogen, the polyarylate resin (A) according to the present invention has no mesogen.

The aromatic dicarboxylic acid to give the aromatic dicarboxylic acid residue is not particularly limited as long as the aromatic dicarboxylic acid reacts with dihydric phenol to give a polymer. Examples thereof include terephthalic acid, isophthalic acid, orthophthalic acid, 4,4'-biphenyldicarboxylic acid, 2,2'-biphenyldicarboxylic acid, 1,5-naphthalenedicarboxylic acid, 2,6-naphthalenedicarboxylic acid, diphenyl ether-2,2'-dicarboxylic acid, diphenyl ether-2,3'-dicarboxylic acid, diphenyl ether-2,4'-dicarboxylic acid, diphenyl ether-3,3'-dicarboxylic acid, diphenyl ether-3,4'-dicarboxylic acid, and diphenyl ether-4,4'-dicarboxylic acid. The aromatic dicarboxylic acid may be a derivative of the aromatic dicarboxylic acid. The aromatic dicarboxylic acid may be constituted by one of those described earlier or may be constituted by two or more thereof. Among others, the aromatic dicarboxylic acid preferably contains terephthalic acid and isophthalic acid from the viewpoint of melt processability. In the case of containing terephthalic acid and isophthalic acid, the mass ratio of the terephthalic acid to the isophthalic acid (terephthalic acid/isophthalic acid) is preferably 70/30 to 0/100, more preferably 50/50 to 0/100.

The dihydric phenol to give the dihydric phenol residue is not particularly limited as long as the dihydric phenol reacts with aromatic dicarboxylic acid to give a polymer. Examples thereof include 2,2-bis(4-hydroxyphenyl)propane [bisphenol A], 2,2-bis(4-hydroxy-3,5-dibromophenyl)propane, 2,2-bis(4-hydroxy-3,5-dichlorophenyl)propane, 4,4'-dihydroxydiphenylsulfone, 4,4'-dihydrodiphenyl ether, 4,4'-dihydroxydiphenyl sulfide, 4,4'-dihydroxydiphenyl ketone, 4,4'-dihydroxydiphenylmethane, 2,2-bis(4-hydroxy-3,5-dimethylphenyl)propane, 1,1-bis(4-hydroxyphenyl)ethane, 1,1-bis(4-hydroxyphenyl)cyclohexane, 4,4'-dihydroxydiphenyl, and hydroquinone. These dihydric phenols are in a para-substituted form. The dihydric phenol may be in an ortho-substituted form or a metasubstituted form. The dihydric phenol may be constituted by one of those described earlier or may be constituted by two or more thereof.

Among others, a dihydric phenol residue represented by the general formula (1) is preferably contained because heat resistance can be enhanced. Examples of the dihydric phenol to give the dihydric phenol residue represented by the general formula (1) include 2,2-bis(4-hydroxyphenyl)propane [bisphenol A], 2,2-bis(4-hydroxy-3,5-dibromophenyl)propane, 2,2-bis(4-hydroxy-3,5-dichlorophenyl)propane, 4,4'-dihydroxydiphenylmethane, 2,2-bis(4-hydroxy-3,5-dimethylphenyl)propane, 1,1-bis(4-hydroxyphenyl)ethane, and 1,1-bis(4-hydroxyphenyl)cyclohexane. Among these dihydric phenols, bisphenol A is more preferred from the viewpoint of easy availability and reactivity.

[Formula 1]

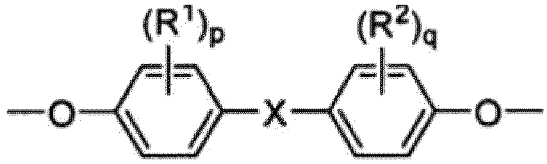 (1)

wherein $R^1$ and $R^2$ each independently represent a hydrocarbon group having 1 to 6 carbon atoms, an alkyl halide group or a halogen atom; p and q each independently represent an integer of 0 to 4; and X represents a hydrocarbon group or an alkyl halide group.

The polyarylate resin (A) may contain a dicarboxylic acid other than the aromatic dicarboxylic acid, such as adipic acid or sebacic acid, or a diol other than the dihydric phenol, such as ethylene glycol or propylene glycol, as long as the amount thereof is small. The contents of the dicarboxylic acid other than the aromatic dicarboxylic acid and the diol other than the dihydric phenol are preferably less than 10 mol% with respect to the total dicarboxylic acid component and the total diol component, respectively.

The logarithmic viscosity of the polyarylate resin (A) is preferably 0.5 to 1.5. If the logarithmic viscosity of the component (A) is less than 0.5, the spinnability of the resin composition may be reduced. On the other hand, if the logarithmic viscosity of the component (A) exceeds 1.5, the spinnability of the resin composition may be reduced or the modelability of a filament-like molded body may be reduced.

The glass transition temperature of the polyarylate resin (A) is preferably 150 to 250°C. If the glass transition temperature of the component (A) is lower than 150°C, the resulting model may not obtain sufficient heat resistance. On the other hand, if the glass transition temperature of the component (A) exceeds 250°C, the resulting resin composition needs to be processed at a high temperature. This may cause the deterioration of resins ascribable to a high temperature.

<Polyester resin (B)>

The modelability of a filament-like molded body obtained from the resin composition containing the polyarylate resin (A) and the polyester resin (B) is improved in a 3D printer. The dimentional stability of resulting model is improved. Furthermore, the resulting model is semitransparent or transparent, and as such, can also be used in containers, etc. required to be transparent.

The polyester resin (B) according to the present invention includes a dicarboxylic acid component and a diol component, and is a polyester resin different from the polyarylate resin (A). The polyester resin (B) is produced by a solution polymerization method, a melt polymerization method, or the like.

Examples of the dicarboxylic acid to give the dicarboxylic acid residue include: aromatic dicarboxylic acids such as terephthalic acid, isophthalic acid, orthophthalic acid, sodium 5-sulfoisophthalate, 2,6-naphthalenedicarboxylic acid, 4,4'-diphenyldicarboxylic acid, and diphenylsulfonedicarboxylic acid; aliphatic dicarboxylic acids such as oxalic acid, succinic acid, adipic acid, sebacic acid, azelaic acid, and decanedicarboxylic acid; and alicyclic dicarboxylic acids such as 1,4-cyclohexanedicarboxylic acid, 1,3-cyclohexanedicarboxylic acid, and 1,2-cyclohexanedicarboxylic acid. Among these dicarboxylic acid, terephthalic acid is preferred. The dicarboxylic acid may be a derivative of the dicarboxylic acid above. The dicarboxylic acid may be constituted by one of those described earlier or may be constituted by two or more thereof.

In the case of using terephthalic acid as the dicarboxylic acid, the content of the terephthalic acid is preferably 70 mol% or more, more preferably 90 mol% or more, further preferably 100 mol%, with respect to the total dicarboxylic acid component.

Examples of the diol to give the diol residue include: aromatic diols such as ethylene oxide adducts of bisphenol A or bisphenol S; aliphatic diols such as ethylene glycol, propylene glycol, 1,2-propanediol, 1,3-propanediol, 1,2-butanediol, 1,3-butanediol, 1,4-butanediol, 2,3-butanediol, diethylene glycol, 1,5-pentanediol, neopentyl glycol, triethylene glycol, and polyethylene glycol; and alicyclic diols such as 1,4-cyclohexanedimethanol and 1,4-cyclohexanediethanol. Among these diols, ethylene glycol is preferred. The diol may be a derivative of the diol. The diol may be constituted by one of those described earlier or may be constituted by two or more thereof.

In the case of containing ethylene glycol as the diol, the content of the ethylene glycol is preferably 70 mol% or more, more preferably 90 mol% or more, further preferably 100 mol%, with respect to the total diol component.

The polyester resin (B) may contain an aromatic polycarboxylic acid such as trimellitic acid or pyromellitic acid, an aliphatic polyol such as trimethylolpropane or pentaerythritol, or a hydroxycarboxylic acid such as 4-hydroxybenzoic acid or ε-caprolactone, as long as the amount thereof is small. The aromatic polycarboxylic acid and the aliphatic polyol are preferably of 5 mol% by or less with respect to the total dicarboxylic acid component and the total diol component, respectively. The hydroxycarboxylic acid is preferably of 10 mol% or less with respect to the total of the dicarboxylic acid component and the diol component.

The limiting viscosity of the polyester resin (B) is preferably 0.5 to 2.0. If the limiting viscosity of the component (B) is less than 0.5, the spinnability of the resin composition may be reduced. On the other hand, if the limiting viscosity of the component (B) exceeds 2.0, the spinnability of the resin composition may be reduced or the modelability of a filament-like molded body may be reduced.

In the resin composition containing the polyarylate resin (A) and the polyester resin (B), the mass ratio of the component (A) to the component (B) [(A)/(B)] needs to be 70/30 to 40/60 and is preferably 60/40 to 40/60. If the content of the component (B) with respect to the total of the components (A) and (B) is less than 30 mass%, the resin composition may be difficult for melt-process because the fluidity is reduced and also because a melt processing temperature and a decomposition temperature are too close. On the other hand, if the content of the component (B) exceeds 60 mass%, the resulting model may not obtain sufficient heat resistance and the dimensional stability may be reduced.

The resin composition containing the polyarylate resin (A) and the polyester resin (B) preferably has a melt flow rate (MFR) of 4.0 g/10 min or more at a temperature of 290°C under a load of 2.16 kg from the viewpoint of the molding processability and the performance. If MFR is less than 4.0 g/10 min, the fluidity of the resin composition is reduced. Thus, a filament-like molded body is not sufficiently discharged from the nozzle of a fused deposition modeling 3D printer. Furthermore, resins are solidified rapidly and may not sufficiently adhere each other.

The resin composition containing the polyarylate resin (A) and the polyester resin (B) preferably contains an alkali metal salt or alkaline earth metal salt (X) as a transesterification reaction catalyst. The content of the component (X) is preferably 1.0 part by mass or less, more preferably 0.3 parts by mass or less, with respect to 100 parts by mass in total of the components (A) and (B). In the resin composition containing the component (X), the amorphous polyarylate resin (A) and the polyester resin (B) are moderately transesterified at the time of melt kneading, thereby that improves the molding processability and the transparency. If the content of the component (X) exceeds 1.0 part by mass, the effect is saturated and is economically disadvantageous.

Examples of the alkali metal salt or alkaline earth metal salt (X) include alkali metal salts or alkaline earth metal salts of acetic acid, propionic acid, isobutyric acid, or n-butyric acid. Sodium acetate, lithium acetate, potassium acetate,

sodium propionate, potassium propionate, sodium isobutyrate, potassium isobutyrate, sodium n-butyrate, calcium n-butyrate, calcium acetate, magnesium acetate, barium acetate, calcium propionate, magnesium propionate, calcium isobutyrate, magnesium isobutyrate, calcium n-butyrate, and magnesium n-butyrate are preferred. Among these salts, sodium acetate and potassium acetate are preferred from the viewpoint of the cost and the transesterification reaction rate.

The resin composition containing the polyarylate resin (A) and the polyester resin (B) preferably contains a phosphorus compound (Y) as a heat stabilizer. The content of the component (Y) is preferably 1.0 part by mass or less, more preferably 0.3 parts by mass or less, with respect to 100 parts by mass in total of the components (A) and (B). The resin composition containing the component (Y) has favorable heat stability at the time of melt kneading, thereby that suppresses the reduction of the viscosity and improves the transparency. If the content of the component (Y) exceeds 1.0 part by mass, the transparency of the resin composition may be reduced.

Examples of the phosphorus compound (Y) include: phosphite compounds such as dilauryl hydrogen phosphite, tributyl phosphite, tris(2-ethylhexyl) phosphite, tridecyl phosphite, tristearyl phosphite, tris(nonylphenyl) phosphite, triphenyl phosphite, trilauryl trithiophosphite, diphenyldecyl phosphite, diphenyl(tridecyl) phosphite, and diphenyl hydrogen phosphite; and phosphate compounds such as butyl acid phosphate and β-chloroethyl acid phosphate. Specific examples of the phosphorus compound (Y) include JP212, JP310, JP360, JP351, and JP504 manufactured by Johoku Chemical Co., Ltd.

Examples of the method for producing pellets of the resin composition containing the polyarylate resin (A) and the polyester resin (B) include a method of dryblending pellets of the component (A) and pellets of the component (B), and a method for melt-kneading the components (A) and (B) for the pelletization.

When the component (B) is a crystalline polyester resin, the melt kneading temperature is preferably a temperature higher by at least 50°C than the glass transition temperature of the component (A) and higher by at least 10°C than the melting point of the component (B). On the other hand, when the component (B) is an amorphous polyester resin, the melt kneading temperature is preferably a temperature higher by at least 50°C than the glass transition temperatures of both the components (A) and (B).

<Polyamide resin (C)>

A filament-like molded body obtained from the resin composition containing the polyarylate resin (A) and the polyamide resin (C) is improved in the flex resistance and is thus less likely to fracture during modeling, and also exhibits reduced diameter unevenness. The resulting model, is semitransparent or transparent as in the model obtained from the resin composition containing the components (A) and (B), and as such, can also be used in models such as containers.

The polyamide resin (C) is a resin constituted by an amino acid residue, a lactam residue, or a diamine residue and a dicarboxylic acid residue.

Examples of the amino acid to give the amino acid residue include 6-aminocaproic acid, 11-aminoundecanoic acid, 12-aminododecanoic acid, and p-aminomethylbenzoic acid. The amino acid may be constituted by one of those described earlier or may be constituted by two or more thereof.

Examples of the lactam to give the lactam residue include ε-caprolactam and ω-laurolactam. The lactam may be constituted by one of those described earlier or may be constituted by two or more thereof.

Examples of the diamine to give the diamine residue include: aliphatic diamines such as tetramethylenediamine, hexamethylenediamine, undecamethylenediamine, dodecamethylenediamine, 2,2,4-trimethylhexamethylenediamine, 2,4,4-trimethylhexamethylenediamine, 5-methylnonamethylenediamine, and 2,4-dimethyloctamethylenediamine; aromatic diamines such as m-xylylenediamine, p-xylylenediamine, and o-xylylenediamine; and alicyclic diamines such as 1,3-bis(aminomethyl)cyclohexane, 1-amino-3-aminomethyl-3,5,5-trimethylcyclohexane, 3,8-bis(aminomethyl)tricyclodecane, bis(4-aminocyclohexyl)methane, bis(3-methyl-4-aminocyclohexyl)methane, and 2,2-bis(4-aminocyclohexyl)propane. The diamine may be a derivative of the diamine. The diamine may be constituted by one of those described earlier or may be constituted by two or more thereof.

Examples of the dicarboxylic acid to give the dicarboxylic acid residue include: adipic acid, suberic acid, azelaic acid, sebacic acid, dodecanedioic acid, aromatic dicarboxylic acids such as terephthalic acid, isophthalic acid, naphthalenedicarboxylic acid, 2-chloroterephthalic acid, 2-methylterephthalic acid, 5-methylisophthalic acid, and 5-sodium sulfoisophthalate; and aliphatic dicarboxylic acids such as hexahydroterephthalic acid, hexahydroisophthalic acid, and diglycolic acid. The dicarboxylic acid may be a derivative of the dicarboxylic acid. The dicarboxylic acid may be constituted by one of those described earlier or may be constituted by two or more thereof.

Specific examples of the polyamide resin (C) include polycaproamide (polyamide 6), polytetramethylene adipamide (polyamide 46), polyhexamethylene adipamide (polyamide 66), polyhexamethylene sebacamide (polyamide 610), polyhexamethylene dodecamide (polyamide 612), polyundecamethylene adipamide (polyamide 116), polyundecanamide (polyamide 11), polydodecanamide (polyamide 12), polytrimethylhexamethylene terephthalamide (polyamide TMDT), polyhexamethylene isophthalamide (polyamide 61), polyhexamethylene terephthalamide/isophthalamide (polyamide 6T/6I), poly-bis(4-aminocyclohexyl)methane dodecamide, (polyamide PACM12), poly-bis(3-methyl-4-aminocyclohexyl)methane dodecamide (polyamide dimethyl PACM12), poly-m-xylylene adipamide (polyamide MXD6), polyundecamethylene terephthalamide (polyamide 11T), polyundecamethylene hexahydroterephthalamide (polyamide 11T(H)) and copolymers and mixtures thereof. Among these polyamide resins, polyamide 6, polyamide 46, polyamide 66 and copolymers and mixtures thereof are preferred.

The relative viscosity of the polyamide resin (C) is preferably 1.5 to 3.0. If the relative viscosity of the component (C) is less than 1.5, the spinnability of the resin composition may be reduced. On the other hand, if the relative viscosity of the (C) exceeds 3.0, the spinnability of the resin composition may be reduced or the modelability of a filament-like molded body may be reduced.

In the resin composition containing the polyarylate resin (A) and the polyamide resin (C), the mass ratio of the component (A) to the component (C) [(A)/(C)] needs to be 60/40 to 40/60 and is preferably 55/45 to 45/55. If the content of the component (C) with respect to the total of the components (A) and (C) is less than 40 mass%, the resin composition may not obtain an effect of improving processability by decrease in the melting temperature. On the other hand, if the content of the component (C) exceeds 60 mass%, the resulting model may not obtain the sufficient heat resistance and the dimensional stability may be reduced.

The resin composition containing the polyarylate resin (A) and the polyamide resin (C) preferably has a melt flow rate (MFR) of 4.0 g/10 min or more at a temperature of 260°C under a load of 2.16 kg from the viewpoint of the molding processability and the performance. If MFR is less than 4.0 g/10 min, the fluidity of the resin composition is reduced. Thus, a filament-like molded body is not sufficiently discharged from a nozzle of a fused deposition modeling 3D printer. Furthermore, the resins are solidified rapidly and may not sufficiently adhere each other.

Examples of the method for producing pellets of the resin composition containing the polyarylate resin (A) and the polyamide resin (C) include a method of dryblending pellets of the component (A) and pellets of the component (C), and a method for melt-kneading the components (A) and (C) for the pelletization.

Since the component (C) is usually crystalline, the melt kneading temperature is preferably a temperature higher by at least 50°C than the glass transition temperature of the component (A) and higher by at least 10°C than the melting point of the component (C).

<Polycarbonate resin (D)>

A filament-like molded body obtained from the resin composition containing the polyarylate resin (A) and the polycarbonate resin (D) exhibits reduced the diameter unevenness, and is also improved in the flex resistance and is thus less likely to fracture during modeling. The resulting model is semitransparent or transparent as in the model obtained from the resin composition containing the components (A) and (B), and as such, can also be used in models such as containers.

The polycarbonate resin (D) is a resin constituted by a dihydric phenol residue and a carbonate residue. The polycarbonate resin (D) is produced by a melt polymerization method or an interfacial polymerization method.

Examples of the dihydric phenol to give the dihydric phenol residue include bisphenol A, 2,2-bis(3,5-dibromo-4-hydroxyphenyl)propane, 2,2-bis(3,5-dimethyl-4-hydroxyphenyl)propane, 1,1-bis(4-hydroxyphenyl)cyclohexane, 1,1-bis(3,5-dimethyl-4-hydroxyphenyl)cyclohexane, 1,1-bis(4-hydroxyphenyl)decane, 1,4-bis(4-hydroxyphenyl)propane, 1,1-bis(4-hydroxyphenyl)cyclododecane, 4,4'-dihydroxydiphenyl ether, 4,4'-dithiodiphenol, 4,4'-dihydroxy-3,3'-dichlorodiphenyl ether, and 4,4'-dihydroxy-2,5-dihydroxydiphenyl ether. The dihydric phenol may be constituted by one of those described earlier or may be constituted by two or more thereof.

Examples of the precursor for introducing the carbonate residue include phosgenes such as carbonyl halide, and carbonic acid esters such as diphenyl carbonate.

The limiting viscosity of the polycarbonate resin (D) is preferably 0.4 to 1.0. If the limiting viscosity of the component (D) is less than 0.4, the spinnability of the resin composition may be reduced. If the limiting viscosity of the component (D) exceeds 1.0, the spinnability of the resin composition may be reduced or the modelability of a filament-like molded body may be reduced.

In the resin composition containing the polyarylate resin (A) and the polycarbonate resin (D), the mass ratio of the component (A) to the component (D) [(A)/(D)] needs to be 60/40 to 40/60 and is preferably 50/50 to 40/60. If the content of the component (D) with respect to the total of the components (A) and (D) is less than 40 mass%, the resin composition may not obtain an effect of improving processability by the decrease in the melting temperature. On the other hand, if the content of the component (D) exceeds 60 mass%, the resulting model may not obtain the sufficient heat resistance and the dimensional stability may be reduced.

The resin composition containing the polyarylate resin (A) and the polycarbonate resin (D) preferably has a melt flow rate (MFR) of 4.0 g/10 min or more at a temperature of 300°C under a load of 2.16 kg from the viewpoint of the molding processability and the performance. If MFR is less than 4.0 g/10 min, the fluidity of the resin composition is reduced. Thus, a filament-like molded body is not sufficiently discharged from a nozzle of a fused deposition modeling 3D printer. Furthermore, resins are solidified rapidly and may not sufficiently adhere each other.

The resin composition containing the polyarylate resin (A) and the polycarbonate resin (D) preferably contains spherical silica (Z) in order to improve the dimensional stability of the resulting model. The content of the component (Z) is preferably less than 60 parts by mass, more preferably less than 40 parts by mass, with respect to 100 parts by mass in total of the components (A) and (D). If the content of the component (Z) is 60 parts by mass or more, the resin composition may be difficult to produce in such a way that the resin composition is difficult to pelletize by the melt kneading and the extrusion.

The average particle size of the spherical silica (Z) is preferably 10 μm or smaller, more preferably 5 μm or smaller. If the average particle size of the component (Z) exceeds 10 μm, a filament-like molded body may clog the nozzle at the time of modeling or the surface of the filament-like molded body or the surface of a model may be rough. The resulting model may have the insufficient dimensional stability. The average particle size of the component (Z) is the value that is defined by a particle size value at 50% of the cumulative mass when a particle size distribution is measured using a particle size distribution measurement apparatus such as a laser diffraction/scattering particle size distribution analyzer. The measurement is usually performed by preparing a suspension by adding the spherical silica to water or alcohol aimed for a measurement permissible concentration, and dispersing the spherical silica using an ultrasonic dispersing machine.

The spherical silica (Z) may be surface-treated by the silane coupling in order to improve the adhesion to resins.

The resin composition may also contain a dispersant in order to improve the dispersibility of the spherical silica (Z) in resins. Examples of the dispersant include fatty acid esters, fatty acid amides such as ethylenebishydroxystearamide and ethylenebisstearamide, and derivatives thereof. Uniform dispersion of the spherical silica (Z) in resins improves the dimensional stability of the resulting model. The content of the dispersant is preferably 0.01 to 0.5 parts by mass with respect to 100 parts by mass in total of the components (A) and (D).

Examples of the method for producing pellets of the resin composition containing the polyarylate resin (A) and the polycarbonate resin (D) include a method of dryblending pellets of the component (A) and pellets of the component (D), and a method for melt-kneading the components (A) and (D) for the pelletization.

Since the polycarbonate resin (D) is usually amorphous, the melt kneading temperature is preferably a temperature higher by at least 50°C than the glass transition temperatures of both the components (A) and (D) .

<Resin composition>

The resin composition of the present invention may further contain a filler (E) in order to improve the dimensional stability of the resulting model. Examples of the filler (E) include glass beads, glass fiber powders, wollastonite, mica, synthetic mica, sericite, talc, clay, zeolite, bentonite, kaolinite, dolomite, silica, potassium titanate, finely powdered silicic acid, shirasu balloon, calcium carbonate, magnesium carbonate, barium sulfate, aluminum oxide, magnesium oxide, calcium oxide, titanium oxide, aluminum silicate, zirconium silicate, gypsum, graphite, montmorillonite, carbon black, calcium sulfide, zinc oxide, boron nitride, and cellulose fiber. Among these fillers, talc is preferred.

The average particle size of the filler (E) is preferably 100 μm or smaller, more preferably 50 μm or smaller, in order to obtain a filament-like molded body with the good spinnability. If the average particle size of the filler (E) exceeds 100 μm, the filtration pressure may be elevated due to the clogging of a filter in a spinning machine at the time of production of a filament-like molded body. Also, the quality of resulting filament-like molded body may be reduced due to the strong surface roughness. The average particle size of the component (E) is a value that is defined by a particle size value at 50% of the cumulative mass when a particle size distribution is measured using a particle size distribution measurement apparatus such as a laser diffraction/scattering particle size distribution analyzer. The measurement is usually performed by preparing a suspension by adding the component (E) to water or alcohol with a measurement permissible concentration, and dispersing the component (E) using an ultrasonic dispersing machine.

The content of the filler (E) is preferably 30 parts by mass or less, more preferably 20 parts by mass or less, with respect to 100 parts by mass in total of the components (A) and (B), the components (A) and (C), or the components (A) and (D), respectively. If the content of the component (E) exceeds 30 parts by mass, the spinnability of the resin composition may be reduced. The resulting filament-like molded body may have the large diameter unevenness or the large surface roughness.

The resin composition of the present invention can contain an additive such as a colorant (a dye, a pigment, etc.), an antistatic agent, a terminal blocking agent, an ultraviolet protective agent, a light stabilizer, an anti-fog agent, an anti-mist agent, a plasticizer, a flame retardant, a color protective agent, an antioxidant, a mold release agent, a damp-proofing agent, an oxygen barrier agent, or a crystal nucleating agent without impairing the object of the present invention. The additive may be constituted by one of those described earlier or may be constituted by two or more thereof. The particle size of the additive is preferably 100 μm or smaller in order to obtain a filament-like molded body with the good spinnability.

<Filament-like molded body>

The filament-like molded body of the present invention is constituted by the resin composition of the present invention. The resin composition is prepared into a filament shape and that can thereby be suitably used as a modeling material for fused deposition modeling 3D printers. The filament-like molded body may be a monofilament or a multifilament, and is preferably a monofilament. The filament-like molded body may be drawn or undrawn.

The diameter of the filament-like molded body is preferably 0.2 to 5.0 mm, more preferably 1.5 to 3.2 mm, further preferably 1.6 to 3.1 mm. If the diameter of the filament-like molded body is smaller than 0.2 mm, the filament-like molded body is too thin and thus may not be suitable for general-purpose fused deposition modeling 3D printers. The upper limit of the diameter of the filament-like molded body suitable for general-purpose fused deposition modeling 3D printers is on the order of 5.0 mm.

Examples of the method for producing the filament-like molded body made of a monofilament include a method of melting the resin composition of the present invention at 250 to 370°C, extruding the melt from nozzle holes using a volumetric feeding apparatus, and cooling and solidifying the extrudate in a liquid bath of 50 to 90°C, followed by take-up at a spinning speed of 1 to 50 m/min and winding around a bobbin or the like. In order to make a monofilament shape, drawing may be performed at a ratio of more than 1.0 and 5.0 or less. The draw ratio is more preferably more than 1.0 and 3.5 or less. The drawing can improve the flex resistance of the resulting filament. The drawing of the monofilament may be performed after the temporal winding of the monofilament after spinning. Alternatively, the monofilament may be continuously drawn and subsequently spun without being wound after the spinning. For the drawing, the moderate hot drawing or the heat treatment forms a more stable filament. The strength and the surface smoothness of the formed filament is increased.

A model containing the resin composition of the present invention contains the polyarylate resin (A) and is therefore excellent in heat resistance. In the case of using a deflection temperature under load (DTUL) as an index indicating heat resistance, the deflection temperature under load of the model containing the resin composition of the present invention is preferably 70°C or higher, more preferably 80°C or higher, further preferably 90°C or higher, under a load of 1.8 MPa. If the deflection temperature under load is lower than 70°C under a load of 1.8 MPa, the model does not have the sufficient heat resistance.

## Examples

Hereinafter, the present invention will be specifically described with reference to Examples. However, the present invention is not limited by these Examples.

### A. Evaluation method

The physical properties of a resin composition and a filament-like molded body were measured by the following methods.

#### (1) Spinnability

When a monofilament having a diameter of 1.75 mm was collected at a spinning speed of 10 m/min for 24 hours, the spinnability was evaluated on the basis of the success or failure of take-up of the filament and the presence or absence of thread breakage according to the following two scales.

Good: No thread breakage occurred.
Poor: Thread breakage occurred, or the filament was unable to taken up.

#### (2) Diameter of monofilament

The obtained monofilament was cut perpendicularly to the longitudinal direction of the monofilament at 20-cm intervals to obtain 30 samples. In each sample, the maximum major axis and the minimum minor axis at the cross section were measured using a micrometer, and an average thereof was regarded as the diameter of each sample. The diameters of all the 30 samples were averaged to calculate the diameter of the monofilament.

#### (3) Diameter unevenness of monofilament

The diameter unevenness of the monofilament was calculated using the maximum value (M1) and the minimum value (M2) of the diameters of all the samples calculated in the preceding paragraph (2).

$$\text{Diameter unevenness} = (M1 - M2) / 2$$

(4) Flex resistance of monofilament

The fold number of the monofilament was measured under conditions involving a load of 5 N, a clamp tip R of 0.38 mm, a grip distance of 2.0 mm, a testing rate of 175 rpm, and a folding angle of 135 degrees using a MIT folding endurance tester manufactured by MYS-TESTER Co. Ltd. in accordance with the MIT type folding endurance test described in JIS P 8115. Samples left for 48 hours or longer in normal conditions (room temperature: 22 ± 2°C, humidity: 50 ± 2%) were used in the measurement. In the MIT folding endurance test, each monofilament was measured three times, and an average value was determined. The flex resistance was evaluated on the basis of the fold number according to the following four scales. Excellent: 100 or more

Good: 30 or more and less than 100
Fair: 5 or more and less than 30
Poor: Less than 5

In the present invention, a fold number of 5 or more was accepted. The fold number is more preferably 30 or more, further preferably 100 or more.

(5) 3D printer modelability

The "rook" of FIG. 1 was modeled under conditions of the following nozzle temperature and table temperature using the obtained monofilament and a 3D printer (manufactured by Ninjabot/Sanpou Kogyo K.K., NJB-200HT). In the case of a resin composition containing a polyarylate resin (A) and a polyester resin (B), the nozzle temperature was set to 280 to 300°C, and the table temperature was set to 70 to 100°C. In the case of a resin composition containing the polyarylate resin (A) and a polyamide resin (C), the nozzle temperature was set to 260 to 290°C, and the table temperature was set to 70 to 100°C. In the case of a resin composition containing the polyarylate resin (A) and a polycarbonate resin (D), the nozzle temperature was set to 280 to 320°C, and the table temperature was set to 80 to 100°C.

When resins were not uniformly discharged or came off from the modeling table due to too large warpage and were unable to be modeled, the modelability was evaluated as being "poor". When resins were able to be modeled, the modelability was evaluated according to the following two scales from the appearance of overhang portion 1 shown in FIG. 1.

Excellent: The model did not sag at the overhang portion.
Good: The model sagged at the overhang portion.

In the present invention, modelability evaluated as being "good" or better was accepted.

(6) Heat resistance (DTUL) of model

An 80 × 10 × 4 mm test specimen was modeled under the temperature conditions described in the preceding paragraph (5) 3D printer modelability using the obtained monofilament and a 3D printer (manufactured by Ninjabot/Sanpou Kogyo K.K., NJB-200HT).

Measurement was performed by the method described in ISO 75-1 and -2 using the obtained test specimen. In this operation, the load was 1.8 MPa.

(7) Dimensional stability of model

The "anchor" of FIG. 2 was modeled under the temperature conditions described in the preceding paragraph (5) 3D printer modelability using the obtained monofilament and a 3D printer (manufactured by Ninjabot/Sanpou Kogyo K.K., NJB-200HT).

When modeling failed because the model came off from the modeling table due to too large warpage, the dimensional stability was evaluated as being "poor". When modeling succeeded, the modeled anchor was placed on a smooth horizontal table (marble stone, etc.) and secured by placing a weight at position 5 shown in FIG. 2. Then, the height from the table was measured as to three tip portions 2 to 4 shown in FIG. 2 using a clearance gauge or a caliper, and an average value was determined. The dimensional stability was evaluated according to the following three scales.

Excellent: The average value was 0 mm.
Good: The average value was more than 0 mm and less than 1 mm.
Fair: The average value was 1 mm or more.

In the present invention, dimensional stability evaluated as being "fair" or better was accepted.

(8) Transparency of model

A 50 mm × 50 mm × 1 mmt thin plate was modeled under the temperature conditions described in the preceding paragraph (5) 3D printer modelability using the obtained monofilament and a 3D printer (manufactured by Ninjabot/Sanpou Kogyo K.K., NJB-200HT). Total light transmittance was measured as to this thin plate using a haze meter NDH2000 manufactured by NIPPON DENSHOKU INDUSTRIES, CO., LTD. according to JIS K 7105. The total light transmittance was measured at 5 locations of the thin plate, and an average value was determined.

(9) Logarithmic viscosity

The relative viscosity (ηrel) of the polyarylate resin (A) was measured under conditions involving a concentration of 1 g/dl and a temperature of 25°C using a mixed solution of phenol/1,1,2,2-tetrachloroethane = 60/40 as a solvent. Logarithmic viscosity was calculated from the obtained relative viscosity according to the following expression.

$$\eta inh\ (dl/g) = Ln\ (\eta rel)\ /\ c\ \ (c\text{: concentration})$$

(10) Limiting viscosity

The limiting viscosity of the polyester resin (B) was measured under conditions involving a temperature of 25°C and a concentration of 1 g/dl using phenol/tetrachloroethane (60/40 (mass ratio)) as a solvent.
The limiting viscosity of the polycarbonate resin (D) was measured under a condition of 25°C using 1,1,2,2-tetrachloroethane as a solvent.

(11) Relative viscosity

The relative viscosity of the polyamide resin (C) was measured under conditions involving a temperature of 25°C and a concentration of 1 g/dl using 96% sulfuric acid as a solvent.

(12) Glass transition temperature

The temperature was raised under conditions involving a temperature rise rate of 10°C/min using a differential scanning calorimeter (model DSC-7 manufactured by PerkinElmer Inc.). The intermediate value between temperatures at two bending points derived from glass transition in a temperature rise curve was regarded as the glass transition temperature.

(13) Melting point

The temperature was raised to 360°C at a temperature rise rate of 20°C/min using a differential scanning calorimeter (model DSC-7 manufactured by PerkinElmer Inc.), kept at 360°C for 5 minutes, subsequently decreased to 25°C at a temperature drop rate of 20°C/min, further kept at 25°C for 5 minutes, and raised again at a temperature rise rate of 20°C/min. The top of an endothermic peak in this measurement was regarded as the melting point.

B. Raw material

The raw materials used in Examples and Comparative Examples are as follows.

[Polyarylate resin (A)]

U Polymer U-100 manufactured by UNITIKA LTD., bisphenol A/terephthalic acid/isophthalic acid copolymer, logarithmic viscosity: 0.60, glass transition temperature: 193°C

[Polyester resin (B)]

B1: Polyester resin NEH-2070 manufactured by UNITIKA LTD., polyethylene terephthalate, limiting viscosity: 0.88
B2:
A reaction vessel was charged with 58.1 parts by mass of ethylene glycol as a diol component, and 119.3 parts by mass of terephthalic acid and 10.3 parts by mass of isophthalic acid as dicarboxylic acid components, followed by esterification reaction. The esterification reaction was performed under conditions involving 250°C, 200 kPa, and a reaction time of 3 hours by adding an ethylene glycol solution of diantimony trioxide at 200 ppm by mass with respect to the resulting polyester. After the completion of esterification reaction, respective ethylene glycol solution of diantimony trioxide at 200 ppm by mass and orthophosphoric acid at 58 ppm by mass with respect to the resulting polyester were added to the reaction vessel. The temperature was gradually raised from 250°C to 280°C while the pressure was gradually decreased from ordinary temperature. Polycondensation reaction was performed at a reduced pressure of 66 Pa for 5 hours, and the reaction product was extracted into strands, which were then cut using a cutter under water cooling to prepare pellets.
The composition of the obtained polyester resin was terephthalic acid/isophthalic acid/ethylene glycol = 92/8/100 (molar ratio). Limiting viscosity: 0.71.
B3:
A polyester resin was synthesized in the same way as in B2 except that a reaction vessel was charged with 58.1 parts by mass of ethylene glycol as a diol component, and 90.7 parts by mass of terephthalic acid and 38.8 parts by mass of isophthalic acid as dicarboxylic acid components.

The composition of the obtained polyester resin was terephthalic acid/isophthalic acid/ethylene glycol = 70/30/100 (molar ratio). Limiting viscosity: 0.73.

[Polyamide resin (C)]

C1: Nylon 6 A1030BRL manufactured by UNITIKA LTD., relative viscosity: 2.6, melting point: 220°C
C2: Polyamide 6/12 copolymer, 7034B manufactured by Ube Industries, Ltd., melting point: 201°C, glass transition temperature: 60°C, relative viscosity: 3.86

[Polycarbonate resin (D)]

D1: Carbonate resin 300-30 manufactured by Sumika Polycarbonate Ltd., limiting viscosity: 0.49, glass transition temperature: 146°C
D2: Carbonate resin 300-15 manufactured by Sumika Polycarbonate Ltd., limiting viscosity: 0.54, glass transition temperature: 150°C

[Filler (E)]

Talc: High Micron HE5 manufactured by Takehara Kagaku Kogyo Co., Ltd., average particle size: 1.6 μm

[Alkali metal salt (X)]

Sodium acetate

[Phosphorus compound (Y)]

Butyl acid phosphate: manufactured by Johoku Chemical Co., Ltd., JP504

[Spherical silica (Z)]

Molten silica: manufactured by Denka Co., Ltd., FB-5SDC, average particle size: 5 μm

Example 1

Pellets of the polyarylate resin (A) and pellets of the polyester resin (B1) were dried under conditions of 100°C × 12 hours to adjust the moisture contents to 0.01%.

A twin-screw extruder (manufactured by Ikegai Corp., PCM-30, screw diameter: 29 mm, L/D: 30, die diameter: 3 mm, the number of holes: 3) was used. 70 parts by mass of the dried pellets of the polyarylate resin (A) and 30 parts by mass of the dried pellets of the polyester resin (B1) were blended and supplied to the extruder. The blend was kneaded and extruded under conditions involving a kneading temperature of 280°C, the number of screw revolutions of 120 rpm, and a discharge rate of 7 kg/h. Subsequently, strands discharged from the tip of the extruder were cooled in a cooling bath, taken up into a pelletizer, and cut to obtain pellets of a resin composition.

The obtained pellets of the resin composition were dried under conditions of 100°C × 12 hours to adjust the moisture contents to 0.01%.

The dried pellets of the resin composition were extruded from a spinneret having a round cross section having one hole with a hole diameter of 5 mm while a discharge rate was adjusted such that the diameter of the resulting monofilament was 1.75 mm, under conditions involving a spinning temperature of 280°C using a monofilament production apparatus (manufactured by The Japan Steel Works, Ltd., single-screw extruder, screw diameter: 60 mm, melt extrusion zone: 1200 mm) to obtain an undrawn monofilament as a filament-like molded body.

Examples 2 to 3 and 5 to 8, and Comparative Examples 1 to 5

Pellets of each resin composition were obtained by the same operation as in Example 1 except that the composition described in Table 1 was used instead. Then, an undrawn monofilament was obtained from a spinnable resin composition.

Example 4

Dried pellets of a resin composition obtained in the same way as in Example 3 were extruded from a spinneret having a round cross section having one hole with a hole diameter of 5 mm while a discharge rate was adjusted such that the diameter of the resulting monofilament after drawing was 1.75 mm, under conditions involving a spinning temperature of 280°C using the same monofilament production apparatus as described earlier. Subsequently, the extruded monofilament was dipped in a cooling hot water 80°C positioned 20 cm below the spinneret, and taken up with a take-up speed adjusted to 30 m/min to obtain a drawn monofilament as a filament-like molded body (draw ratio = 3.0). The cooling time was approximately 1 minute.

Examples 9, 10, and 12 to 15, and Comparative Examples 6 to 8

Pellets of each resin composition were obtained by the same operation as in Example 1 except that: the polyamide resin (C) was used in place of the polyester resin (B); the kneading temperature and the spinning temperature were changed to 260°C; and the composition described in Table 2 was used instead. Then, an undrawn monofilament was obtained from a spinnable resin composition.

Example 11

Pellets of a resin composition were obtained by the same operation as in Example 4 except that: the polyamide resin (C) was used in place of the polyester resin (B); the kneading temperature and the spinning temperature were changed to 260°C; and the composition described in Table 2 was used instead. Then, a drawn monofilament was obtained.

Examples 16, 17, and 19 to 23, and Comparative Examples 9 to 11

Pellets of each resin composition were obtained by the same operation as in Example 1 except that: the polycarbonate resin (D) was used in place of the polyester resin (B); the kneading temperature and the spinning temperature were changed to 310°C; and the composition described in Table 3 was used instead. Then, an undrawn monofilament was obtained from a spinnable resin composition.

Example 18

Pellets of a resin composition were obtained by the same operation as in Example 4 except that: the polycarbonate resin (D) was used in place of the polyester resin (B); the kneading temperature and the spinning temperature

were changed to 310°C; and the composition described in Table 3 was used instead. Then, a drawn monofilament was obtained.

The compositions of the resin compositions are shown in Tables 1 to 3. Also, results of evaluating the characteristics of the resin compositions, the monofilaments obtained in Examples and Comparative Examples, and the models obtained therefrom are shown in Tables 1 to 3.

[Table 1]

| | | Composition of resin composition | | | | | | Characteristics of resin composition | | Undrawn/ drawn (draw ratio) | Characteristics of monofilament | | | | | Characteristics of model | | |
|---|---|---|---|---|---|---|---|---|---|---|---|---|---|---|---|---|---|---|
| | | Polyarylate resin (A) | Polyester resin (B) | | Filler (E) | Alkali metal salt (X) | Phosphorus compound (Y) | MFR (290°C 2.16 kgf) | Spinnability | | Diameter | Diameter unevenness | Flex resistance | | 3D printer modelability | Dimensional stability | Heat resistance (DTUL (1.8 MPa)) | Transparency (total light transmittance) |
| | | parts by mass | Type | parts by mass | parts by mass | parts by mass | parts by mass | g/10 min | Evaluation | | mm | mm | Fold number | Evaluation | Evaluation | Evaluation | °C | % |
| Example | 1 | 70 | B1 | 30 | - | - | - | 4.1 | Good | Undrawn | 1.73 | 0.10 | 56 | Good | Good | Excellent | 92 | 50 |
| | 2 | 60 | | 40 | - | - | - | 5.4 | Good | Undrawn | 1.73 | 0.07 | 42 | Good | Excellent | Excellent | 88 | 49 |
| | 3 | 40 | | 60 | - | - | - | 11 | Good | Undrawn | 1.74 | 0.03 | 35 | Good | Excellent | Good | 74 | 53 |
| | 4 | | | | | | | | | Drawn (3.0) | 1.75 | 0.02 | 238 | Excellent | Excellent | Good | | |
| | 5 | 40 | | 60 | 11 | - | - | 8.3 | Good | Undrawn | 1.75 | 0.05 | 15 | Fair | Excellent | Excellent | 75 | 45 |
| | 6 | 60 | | 40 | - | 0.06 | 0.06 | 4.5 | Good | Undrawn | 1.74 | 0.07 | 53 | Good | Excellent | Good | 75 | 69 |
| | 7 | | | | - | 0.1 | 0.1 | 4.2 | Good | Undrawn | 1.75 | 0.06 | 58 | Good | Excellent | Good | 74 | 70 |
| | 8 | 60 | B2 | 40 | - | - | - | 10 | Good | Undrawn | 1.74 | 0.12 | 81 | Good | Excellent | Excellent | 82 | 44 |
| Comparative Example | 1 | 100 | - | - | - | - | - | immeasurable | Poor | - | - | - | - | - | - | - | - | - |
| | 2 | 80 | B1 | 20 | - | - | - | 3.3 | Poor | - | - | - | - | - | - | - | - | - |
| | 3 | 30 | | 70 | - | - | - | 15 | Good | Undrawn | 1.74 | 0.05 | 22 | Fair | Good | Poor | 71 | 48 |
| | 4 | - | | 100 | - | - | - | 13 | Good | Undrawn | 1.75 | 0.02 | 31 | Good | Poor | Poor | 65 | - |
| | 5 | - | B3 | 100 | - | - | - | immeasurable | Good | Undrawn | 1.75 | 0.04 | 126 | Excellent | Good | Excellent | 59 | 68 |

[Table 2]

| | | Composition of resin composition | | | | Characteristics of resin composition | | Undrawn/ drawn (draw ratio) | Characteristics of monofilament | | | | | Characteristics of model | |
|---|---|---|---|---|---|---|---|---|---|---|---|---|---|---|---|
| | | Polyarylate resin (A) | Polyamide resin (C) | | Filler (E) | MFR (260°C 2.16 kgf) | Spinnability | | Diameter | Diameter unevenness | Flex resistance | | 3D printer modelability | Dimensional stability | Heat resistance (DTUL (1.8 MPa)) |
| | | parts by mass | Type | parts by mass | parts by mass | g/10 min | Evaluation | | mm | mm | Fold number | Evaluation | Evaluation | Evaluation | °C |
| Example | 9 | 60 | C1 | 40 | - | 4 | Good | Undrawn | 1.74 | 0.05 | 121 | Excellent | Good | Fair | 143 |
| | 10 | 50 | | 50 | - | 4.6 | Good | Undrawn | 1.75 | 0.05 | 135 | Excellent | Good | Fair | 140 |
| | 11 | | | | | | | Drawn (3.0) | 1.75 | 0.03 | 654 | Excellent | Good | Fair | |
| | 12 | 40 | | 60 | - | 5.6 | Good | Undrawn | 1.73 | 0.03 | 168 | Excellent | Good | Fair | 130 |
| | 13 | 50 | | 50 | 11 | 4.3 | Good | Undrawn | 1.75 | 0.11 | 22 | Fair | Good | Good | 138 |
| | 14 | 40 | | 60 | 11 | 5.2 | Good | Undrawn | 1.75 | 0.09 | 28 | Fair | Good | Good | 131 |
| | 15 | 50 | C2 | 50 | - | 18 | Good | Undrawn | 1.74 | 0.18 | 203 | Excellent | Good | Good | 138 |
| Comparative Example | 6 | 80 | C1 | 20 | - | 2.9 | Poor | - | - | - | - | - | - | - | - |
| | 7 | 30 | | 70 | - | 6.7 | Good | Undrawn | 1.75 | 0.07 | 233 | Excellent | Good | Poor | 65 |
| | 8 | - | | 100 | - | 80 | Good | Undrawn | 1.75 | 0.02 | 178 | Excellent | Poor | Poor | 50 |

[Table 3]

| | | Composition of resin composition | | | | | Characteristics of resin composition | | | Characteristics of monofilament | | | | | Characteristics of model | | |
|---|---|---|---|---|---|---|---|---|---|---|---|---|---|---|---|---|---|
| | | Polyarylate resin (A) | Polycarbonate resin (D) | | Filler (E) | Spherical silica (Z) | MFR (300°C 2.16 kgf) | Spinnability | Undrawn/ drawn (draw ratio) | Diameter | Diameter unevenness | Flex resistance | | 3D printer modelability | Dimensional stability | Heat resistance (DTUL (1.8 MPa)) | Transparency (total light transmittance) |
| | | parts by mass | Type | parts by mass | parts by mass | parts by mass | g/10 min | Evaluation | | mm | mm | Fold number | Evaluation | Evaluation | Evaluation | °C | % |
| Example | 16 | 60 | D1 | 40 | - | - | 8.4 | Good | Undrawn | 1.74 | 0.03 | 51 | Good | Good | Fair | 158 | 54 |
| | 17 | 40 | | 60 | - | - | 12 | Good | Undrawn | 1.74 | 0.02 | 73 | Good | Good | Fair | 145 | 54 |
| | 18 | | | | | | | | Drawn (3.0) | 1.74 | 0.01 | 278 | Excellent | Good | Fair | | |
| | 19 | 60 | | 40 | 11 | - | 5.9 | Good | Undrawn | 1.75 | 0.04 | 11 | Fair | Good | Good | 155 | 46 |
| | 20 | 40 | | 60 | 11 | - | 8.2 | Good | Undrawn | 1.74 | 0.03 | 16 | Fair | Good | Good | 144 | 48 |
| | 21 | 60 | | 40 | - | 25 | 4.2 | Good | Undrawn | 1.75 | 0.02 | 38 | Good | Good | Good | 160 | 38 |
| | 22 | 40 | | 60 | - | 25 | 7.1 | Good | Undrawn | 1.75 | 0.03 | 33 | Good | Good | Good | 148 | 41 |
| | 23 | 60 | D2 | 40 | - | - | 6.2 | Good | Undrawn | 1.75 | 0.05 | 44 | Good | Good | Good | 156 | 56 |
| Comparative Example | 9 | 80 | D2 | 20 | - | - | 4.1 | Poor | - | - | - | - | - | - | - | - | - |
| | 10 | 30 | | 70 | - | - | 43 | Good | Undrawn | 1.74 | 0.07 | 4 | Poor | Poor | Fair | 142 | 59 |
| | 11 | - | D1 | 100 | - | - | 25 | Good | Undrawn | 1.73 | 0.08 | 142 | Excellent | Poor | Poor | - | - |

The resin compositions of Examples 1 to 23 were excellent in spinnability, and the obtained monofilaments were excellent in modelability in a 3D printer. Hence, these resin compositions can be suitably used as modeling materials for fused deposition modeling 3D printers.

The monofilaments obtained in Examples 4, 11, and 18 were drawn at a ratio of 3.0 and therefore improved in flex resistance as compared with the undrawn monofilaments obtained in Examples 3, 10, and 17.

Since the resin compositions in Examples 5, 13, 14, 19, and 20 contained the filler, the models were improved in dimensional stability as compared with Examples 3, 10, 12, 16, and 17.

Since the resin compositions in Examples 6 and 7 contained the alkali metal salt (X) and the phosphorus compound (Y), the models were improved in transparency as compared with Example 2.

Since the resin compositions in Examples 21 and 22 contained the spherical silica, the models were improved in dimensional stability as compared with Examples 16 and 17.

In Comparative Example 1, an attempt to obtain a filament of the resin composition ended in failure of spinning due to too high a melt processing temperature.

The resin composition of Comparative Example 2 had a small content of the polyester resin and therefore was not spinnable because the melting temperature of the resin composition and the decomposition temperature of the polyester resin were close.

Since the resin composition of Comparative Example 3 had a small content of the polyarylate resin, the obtained model had low dimensional stability and also had low heat resistance.

Since the resin composition of Comparative Example 4 contained only the polyester resin, the monofilament had poor modelability and the obtained model had low dimensional stability.

In Comparative Example 5, the monofilament of the resin composition containing only the polyester resin had favorable modelability and the model had favorable dimensional stability, but low heat resistance.

The resin composition of Comparative Example 6 had a small content of the polyamide resin and therefore was not spinnable because the melting temperature of the resin composition and the decomposition temperature of the polyamide resin were close.

Since the resin composition of Comparative Example 7 had a small content of the polyarylate resin, the obtained model had low dimensional stability and also had low heat resistance.

Since the resin composition of Comparative Example 8 contained only the polyamide resin, the monofilament had poor modelability and the obtained model had low dimensional stability.

The resin composition of Comparative Example 9 had a small content of the polycarbonate resin and therefore was not spinnable because the melt viscosity was too low at the melting temperature of the resin composition.

Since the resin composition of Comparative Example 10 had a small content of the polyarylate resin, the monofilament had poor modelability and the obtained model had low dimensional stability.

Since the resin composition of Comparative Example 11 contained only the polycarbonate resin, the monofilament had poor modelability and the obtained model had low dimensional stability.

Reference Signs List

1 Overhang portion
2 Tip portion
3 Tip portion
4 Tip portion
5 Site where a weight is placed

## Claims

**1.** A resin composition for modeling materials for fused deposition modeling 3D printers, the resin composition containing a polyarylate resin (A) and a polyester resin (B), wherein a mass ratio of the polyarylate resin (A) to the polyester resin (B) ((A)/(B)) is 70/30 to 40/60; or containing the polyarylate resin (A) and a polyamide resin (C), wherein a mass ratio of the polyarylate resin (A) to the polyamide resin (C) ((A)/(C)) is 60/40 to 40/60; or
containing the polyarylate resin (A) and a polycarbonate resin (D), wherein a mass ratio of the polyarylate resin (A) to the polycarbonate resin (D) ((A)/(D)) is 60/40 to 40/60.

**2.** The resin composition according to claim 1, wherein the polyarylate resin (A) is a resin mainly comprising an aromatic dicarboxylic acid residue and a dihydric phenol residue.

**3.** The resin composition according to claim 2, wherein the dihydric phenol residue is a residue represented by the following chemical formula (1):

[Formula 1]

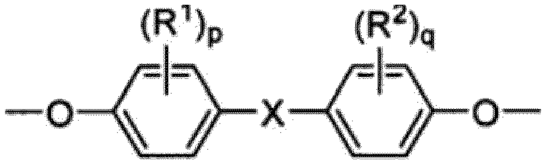

(1)

wherein $R^1$ and $R^2$ each independently represent a hydrocarbon group having 1 to 6 carbon atoms, an alkyl halide group or a halogen atom; p and q each independently represent an integer of 0 to 4; and X represents a hydrocarbon group or an alkyl halide group.

**4.** The resin composition according to any of claims 1 to 3, wherein the resin composition further contains an alkali metal salt or alkaline earth metal salt (X) and a phosphorus compound (Y) together with the polyester resin (B) .

**5.** The resin composition according to any of claims 1 to 3, wherein the resin composition further contains spherical silica (Z) together with the polycarbonate resin (D).

**6.** The resin composition according to any of claims 1 to 5, wherein the resin composition further contains a filler (E).

**7.** A filament-like molded body being a molded body for modeling materials for fused deposition modeling 3D printers, comprising a resin composition according to any of claims 1 to 6 and having a diameter of 0.2 to 5.0 mm.

[FIG. 1]

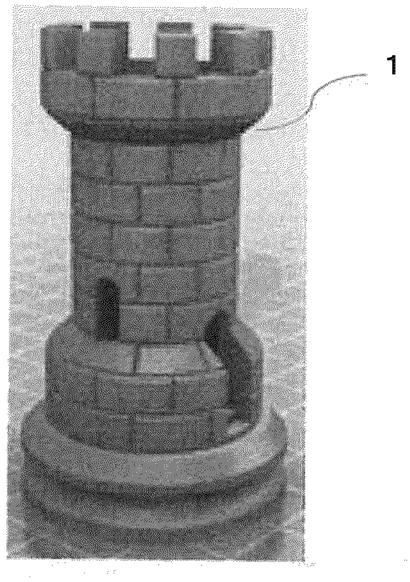


[FIG. 2]

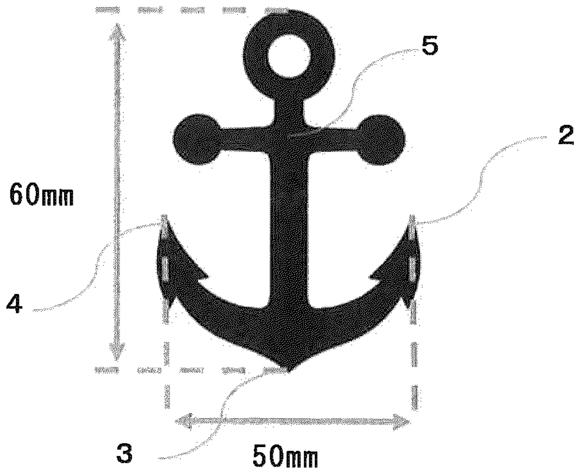

## INTERNATIONAL SEARCH REPORT

International application No.
PCT/JP2019/013125

**A. CLASSIFICATION OF SUBJECT MATTER**

Int.Cl. B29C64/118(2017.01)i, B29C64/314(2017.01)i, B33Y70/00(2015.01)i, C08K3/013(2018.01)i, C08K3/36(2006.01)i, C08K5/098(2006.01)i, C08K5/49(2006.01)i, C08L67/00(2006.01)i, C08L67/03(2006.01)i, C08L69/00(2006.01)i, C08L77/00(2006.01)i

According to International Patent Classification (IPC) or to both national classification and IPC

**B. FIELDS SEARCHED**

Minimum documentation searched (classification system followed by classification symbols)
Int.Cl. B29C64/118, B29C64/314, B33Y70/00, C08K3/013, C08K3/36, C08K5/098, C08K5/49, C08L67/00, C08L67/03, C08L69/00, C08L77/00

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2016-28887 A (THE DOSHISHA) 03 March 2016, claims, paragraph [0034] (Family: none) | 1-7 |
| Y | JP 2002-302596 A (UNITIKA LTD.) 18 October 2002, claims, paragraphs [0003]-[0008], table 1 (Family: none) | 1-7 |
| Y | JP 6-106526 A (UNITIKA LTD.) 19 April 1994, claims, paragraphs [0029], [0031], tables 1, 2, (Family: none) | 1-7 |
| Y | JP 2002-47403 A (UNITIKA LTD.) 12 February 2002, paragraphs [0001]-[0005], [0018] (Family: none) | 1-7 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 14 June 2019 (14.06.2019) | 25 June 2019 (25.06.2019) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2019/013125

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2011-68735 A (UNITIKA LTD.) 07 April 2011, claims, paragraphs [0040]-[0045] (Family: none) | 1-7 |
| Y | WO 2007/063795 A1 (UNITIKA LTD.) 07 June 2007, claims, paragraphs [0012]-[0033], table 1 & US 2009/0099296 A1 claims, paragraphs [0010]-[0031], table 1 & EP 1956044 A1 & CN 101287798 A & KR 10-2008-0071970 A | 1-7 |
| Y | JP 10-176102 A (UNITIKA LTD.) 30 June 1998, claims, paragraphs [0001]-[0009] (Family: none) | 4-7 |
| A | JP 2018-2908 A (RICOH CO., LTD.) 11 January 2018, entire text & US 2018/0001520 A1 | 1-7 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2017217881 A
- JP 2016210947 A